Europäisches Patentamt

European Patent Office

Office européen des brevets

(19)

(11) Publication number: **0 165 677**
**B1**

(12) **EUROPEAN PATENT SPECIFICATION**

(45) Date of publication of patent specification: **18.05.88**

(21) Application number: **85303010.4**

(22) Date of filing: **29.04.85**

(51) Int. Cl.⁴: **F 16 G 5/16**

(54) **V-belt structure.**

(30) Priority: **29.05.84 US 614749**

(43) Date of publication of application:
**27.12.85 Bulletin 85/52**

(45) Publication of the grant of the patent:
**18.05.88 Bulletin 88/20**

(84) Designated Contracting States:
**DE FR GB IT NL SE**

(56) References cited:
**DE-A-2 505 228**
**GB-A- 655 173**
**GB-A-2 013 116**

(73) Proprietor: **GENERAL MOTORS CORPORATION**
**General Motors Building 3044 West Grand Boulevard**
**Detroit Michigan 48202 (US)**

(72) Inventor: **Cataldo, Roy S.**
**20230 Plantation**
**Birmingham Michigan 48010 (US)**

(74) Representative: **Breakwell, John Neil Bower et al**
**GM Patent Section Vauxhall Motors Limited Luton Office (F6) P.O. Box No. 3 Kimpton Road Luton Bedfordshire LU2 0SY (GB)**

Courier Press, Leamington Spa, England.

EP 0 165 677 B1

## Description

This invention relates to a push-type metal V-belt as specified in the preamble of claim 1, for example as disclosed in GB—A—655 173.

Prior-art V-belts of the folded variety use either a single constant-thickness folded strip alone, or a constant-thickness folded strip with individual separator blocks disposed between the outer folds of the strip. The constant-thickness folded strip has a large "scrub" distance between retaining bands thereof and the geometric pitch, which results in large friction losses when the pulley ratio is other than 1:1. The combination of a folded strip and separator blocks, while providing a more efficient drive belt, requires handling and assembly of the individual separator blocks, thus increasing the cost and manufacturing complexity of the drive belt.

The present invention is concerned with improving the drive efficiency of a push-type metal V-belt by reducing the scrub distance between retaining bands thereof and the geometric pitch of the drive portions.

To this end a push-type metal V-belt in accordance with the present invention is characterised by the features specified in the characterising portion of claim 1.

A V-belt of this construction is potentially less expensive to manufacture than the type of belt utilising individual blocks.

In a specific embodiment of a push-type metal V-belt in accordance with the present invention, a single fan-folded metal strip has alternating long and short folded legs with open folds at the inner edge of the long legs and tight folds at the inner edge of the short legs. Each short leg is sized so that the inner fold thereof will be located approximately at the pitch diameter of a pulley having the belt supported thereon. Continuous retaining bands are disposed in transverse lateral slots adjacent the inner fold of the short leg in close proximity to the pitch diameter, thus reducing the "scrub" distance of the belt and pulley assembly.

In the drawing:

Figure 1 is a top view of a preferred embodiment of a formed metal strip for the production of a push-type metal V-belt in accordance with the present invention;

Figure 2 is a view along the line 2—2 of Figure 1, in the direction of the arrows;

Figure 3 is an end view of a portion of the metal strip shown in Figures 1 and 2, when folded;

Figure 4 is a view along the line 4—4 of Figure 3, in the direction of the arrows; and

Figure 5 is an end view of the V-belt shown in Figures 1 to 4, when disposed on a drive pulley.

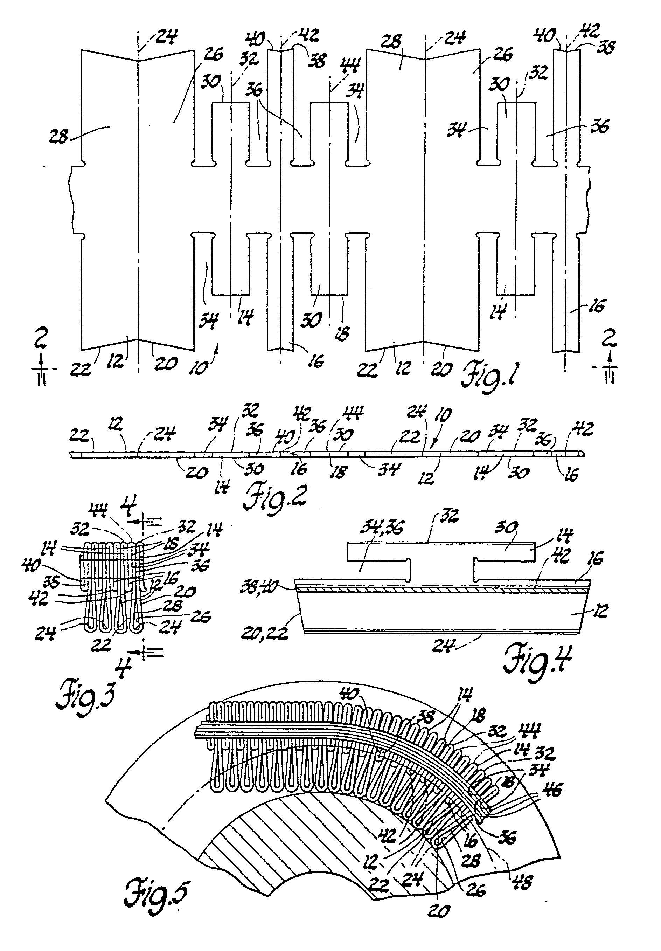

With reference now to the drawing, wherein like characters represent the same or corresponding parts throughout the several views, there is seen in Figures 1 and 2 a single metal strip generally designated 10. As viewed from left to right the strip 10 has, successively, a drive portion 12, a band-retaining portion 14, a drive portion 16 and a band-retaining portion 18, this configuration being repeated along the length of the metal strip until the desired number of elements is reached. The drive portion 12 has drive edges 20 and 22 on opposite sides of a fold line 24.

As is seen in Figure 3, the folded configuration has an open radius at the fold line 24 such that the adjacent lateral faces 26 and 28 of the drive portion 12 are separated. The band-retaining portion 14 has a central bar 30 which has a fold line 32. A band slot 34 is formed between the drive portion 12 and the central bar 30, and a band slot 36 is formed between the central bar 30 and the drive portion 16. As is seen in Figure 4, the band slots 34 and 36 are aligned when the strip is folded along the fold line 32.

The drive portion 16 has drive edges 38 and 40 formed on opposite sides of a fold line 42. The drive portion 16, when folded, forms a short leg between adjacent drive portions 12. Each drive portion 16 has a tight inner fold at the fold line 42, and a tight outer fold at the fold line 32 of the band-retaining portion 14 and also at a fold line 44 of the band-retaining portion 18. The band-retaining portion 18 is identical in configuration to the band-retaining portion 14: it has a central bar 30 with lateral band slots 34 and 36 formed on either side thereof.

The strip 10, when folded to the configuration shown in Figures 3 and 4, is formed into a continuous loop or belt by the use of a plurality of metal bands 46, a portion of such bands 46 being shown in Figure 5. The belt shown in Figure 5 operates with V-grooved pulleys. The geometric pitch of the drive belt is disposed at the fold line 42, which is coincident with the pitch diameter 48 of the pulleys. As is seen in Figure 5, the metal bands 46 are in close proximity to the tight inner folds of drive portion 16. With this configuration, there will be minimum relative motion between the metal bands 46 and the formed strip when the belt is operating in a pulley drive system with a drive ratio other than 1:1. As is well-known, in a 1:1 drive ratio there is no relative speed differential.

The short folded legs permit the folded strip to remain in contact with the pulley with minimal flexing of the outer edges of the metal band, and also retain the tapered inner portions of the drive portions 12 in the configuration shown, with minimal relative movement.

This V-belt structure provides very low friction losses, and thus establishes a high drive efficiency within the drive belt configuration. Since the V-belt is made from a single formed metal strip, the handling of individual belt components is eliminated.

## Claim

A push-type metal V-belt comprising a fan-folded single metal strip (10) provided with slots (34, 36) accommodating continuous metal band means (46) effective to maintain the fan-folded metal strip (10) in a continuous loop when the V-belt is operated with V-grooved pulleys, characterised in that the fan-folded metal strip (10) has alternate tight-folded and open-folded portions (16, 12), the tight-folded portions (16) have an inner fold (42) substantially aligned with the pitch diameter (48) of the pulleys and the open-folded portions (12) have a length greater than that of the tight-folded portions (16), the slots (34, 36) comprise lateral slots (34, 36) formed in both sides of the open-folded and tight-folded portions (12, 16) between inner (24) and outer (32, 44) folds of the open-folded portions (12), and converging drive surface means (20, 22, 38), for frictionally engaging V-grooved pulleys, are formed on edge surfaces of the open-folded and tight-folded portions (12, 16) and extend from the lateral slots (34, 36) to the inner fold (24) of the open-folded portions (12).

**Patentanspruch**

Druckkraftübertragungs-Metall-Keilriemen mit einem fächerförmig gefalteten einzigen Metallstreifen (10), der mit Schlitzen (34, 36) zur Aufnahme von kontinuierlichem Metallbandmittel (46) versehen ist, das ein Halten des fächerförmig gefalteten Metallstreifens (10) einer kontinuierlichen Schleife bewirkt, wenn der Keilriemen mit Keilnut-Scheiben betrieben wird, dadurch gekennzeichnet, daß der fächerförmig gefaltete Metallstreifen (10) abwechselnde eng gefaltete und offen gefaltete Abschnitte (16, 12) besitzt, daß die eng gefalteten Abschnitte (16) eine innere Faltung (42) besitzen, die im wesentlichen mit dem Umlaufdurchmesser (48) der Riemenscheiben ausgerichtet ist und daß die offen gefalteten Abschnitte (12) eine Länge besitzen, die größer als die der dicht gefalteten Abschnitte (16) ist, daß die Schlitze (34, 36) in beiden Seiten der offen gefalteten und dicht gefalteten Abschnitte (12, 16) ausgebildete Querschlitze (34, 36) umfassen zwischen inneren (24) und äußeren (32, 44) Faltungen der offen gefalteten Abschnitte (12) und daß konvergierende Antriebsflächenmittel (20, 22, 38) zum Reibeingriff an Keilnut-Riemenscheiben an Kantenflächen der offen gefalteten und dicht gefalteten Abschnitte (12, 16) ausgebildet sind und von den Querschlitzen (34, 36) zu den inneren Faltungen (24) der offen gefalteten Abschnitte (12) reichen.

**Revendication**

Courroie trapézoïdale métallique du type à poussée comprenant une bande métallique unique pliée en accordéon (10) dans laquelle sont ménagées des fentes (34, 36) de réception de moyens de type ruban métallique continu (46) servant à maintenir la bande métallique pliée en accordéon (10) sous forme d'une boucle continue lorsque la courroie trapézoïdale est utilisée avec les poulies à gorge trapézoïdale, caractérisée en ce que la bande métallique pliée en accordéon (10) comporte des parties à pli serré et à pli ouvert, alternées (16, 12), les parties pliées à pli serré (16) comportent un pli intérieur (42) sensiblement aligné avec le diamètre (48) du cercle primitif des poulies et les parties pliées à pli ouvert (12) ont une longueur supérieure à celle des parties pliées à pli serré (16), les fentes (34, 36) sont constituées par des fentes latérales (34, 36) ménagées dans l'un et l'autre côtés des parties pliées à pli ouvert et à pli serré (12, 16) entre des plis intérieurs (24) et extérieurs (32, 44) des parties pliées à pli ouvert (12), et des moyens du type surfaces d'entraînement convergentes (20, 22, 38, 40), destinés à venir en contact de frottement avec les poulies à gorge trapézoïdale, sont ménagés sur des surfaces de bord des parties pliées à pli ouvert et à pli serré (12, 16) et s'étendent depuis les fentes latérales (34, 36) jusqu'au pli intérieur (24) des parties pliées à pli ouvert (12).

Fig.1

Fig.2

Fig.3

Fig.4

Fig.5